# EUROPEAN PATENT SPECIFICATION

(11) **EP 1 672 924 B1**
(45) Date of publication and mention of the grant of the patent: **06.10.2010**
(21) Application number: 05111096.3
(22) Date of filing: 22.11.2005
(51) Int. Cl.: H04N 7/088

(54) **Display Apparatus and Method**
Anzeigevorrichtung und -verfahren
Appareil et procédé d'affichage

(30) Priority: 15.12.2004 KR 2004106382
(43) Date of publication of application: 21.06.2006
(73) Proprietor: Samsung Electronics Co., Ltd., Suwon-si, Gyeonggi-do (KR)
(72) Inventor: Jung, Ji-yong, Gyeonggi-do (KR)
(74) Representative: Walaski, Jan Filip

(56) References cited:
- JP-A- 60 055 779
- JP-A- 60 201 786
- US-A- 5 708 475

## Description

The present invention relates to display apparatus and to a method of operating display apparatus.

Presently, various versions of display apparatus for receiving a teletext program exist. Teletext data for the teletext program is sent with a broadcasting signal. A display apparatus comprises a teletext decoder to convert received data to be displayable to users.

Presently, teletext programs are used for supplying information such as news, stock quotations, price information, sports, weather, detailed descriptions of TV programs on the air or captions, or information about other programs on the air.

Generally, TV broadcasting companies send a broadcasting signal using a standard as NTSC, PAL, SECAM and so on, and teletext data is present in a predetermined signal line of a vertical blanking interval (VBI) of an image signal sent as a broadcasting signal.

A display apparatus comprising a teletext decoder is capable of displaying an ordinary TV program in a general mode or the teletext program in a teletext mode by a user selection. If a user selects a complex mode, a user may watch these two modes at the same time.

In case of watching a teletext program by user selection, if available teletext data has not being received in a broadcasting receiver, a screen of a display apparatus does not display any picture and is black. Also, in a teletext program comprising a plural subtitle pages, if available subtitle data corresponding to each subtitle page is not received, it does not display any picture. Thus, when it is not received available teletext data corresponding to a teletext program, a user has to wait until available data is displayed on the screen.

According to the invention, there is provided controlling a display apparatus selectively providing a general mode displaying an ordinary TV program, a teletext mode displaying a teletext program, and a complex mode displaying the TV program along with the teletext program, the control method comprising selecting the teletext mode; determining whether a broadcasting signal received according to the selected teletext mode includes teletext data corresponding to the teletext program; and automatically converting into the complex mode, as a result of the determination, when the teletext data is not included.

According to another aspect of the present invention, the control method further comprises skipping the automatic conversion into the complex mode, as a result of the determination, when a user has preset the complex mode and the received broadcasting signal does not include the teletext data.

According to another aspect of the present invention, the control method further comprises returning to the teletext mode, while watching in the complex mode if it is determined that the received broadcasting signal includes the teletext data.

According to another aspect of the present invention, the control method further comprises detecting whether the teletext data includes subtitle data, as a result of the determination, when the received broadcasting signal includes the teletext data; and automatically converting into the complex mode, as a result of the determination, when the received broadcasting signal does not include the subtitle data.

According to another aspect of the present invention, the control method further comprises releasing the complex mode and maintaining the teletext mode, as a result of the determination, when a user has preset the complex mode and the received broadcasting signal includes the subtitle data.

According to another aspect of the present invention, the control method further comprises returning to the teletext mode, while displaying in the complex mode, when it is detected that the received broadcasting signal includes the subtitle data of the teletext data.

According to another aspect of the present invention, the control method further comprises displaying an OSD notifying that the teletext mode is being executed during a predetermined time when it is determined that the received broadcasting signal includes the teletext data and it is detected that the teletext data includes the subtitle data.

The invention also provides a display apparatus comprising an image processor processing image data for displaying a TV program from a received broadcasting signal, a teletext decoder processing teletext data for displaying a teletext program from the broadcasting signal, and a display module displaying a picture according to the image data and the teletext data, the display apparatus comprising a user input module that a user inputs a predetermined watching mode selectively; a complex processor processing to an image format capable of displaying the image data processed by the image processor and the teletext data processed by the teletext decoder on the display module; and a controller controlling so that the complex processor has the image data and the teletext data displayed selectively according to the watching mode on the display module, and automatically converting into a complex mode watching a TV program at a time when the received broadcasting signal does not include the teletext data and a teletext mode for displaying the teletext program is selected by the user input module.

According to another aspect of the present invention, the controller determines whether a user has preset the complex mode when the teletext mode is selected, and controls so that automatic conversion into the complex mode is skipped, as a result of the determination, when the complex mode is preset and the received broadcasting signal does not include the teletext data.

According to another aspect of the present invention, the controller controls so that the complex mode is released and the selected teletext mode is maintained when the complex mode has been preset and the received broadcasting signal includes the teletext data.

According to another aspect of the present invention, the controller controls so that it is returned to the teletext mode when it is detected that the received broadcasting signal includes subtitle data of the teletext data while displaying in the teletext mode.

According to another aspect of the present invention, the controller controls so that an OSD, notifying that the teletext mode is being executed, is displayed on the display module during a predetermined time.

Embodiments of the present invention will now be described by way of example only with reference to the accompanying drawings of which:
Figure 1 is a schematic diagram of an embodiment of display apparatus according to and operable according to the present invention;
Figure 2 is a control flow chart of the Figure 1 display apparatus; and
Figure 3 is a continuation of the Figure 2 control flow chart.

In the accompanying drawings, like reference numerals refer to like elements throughout.

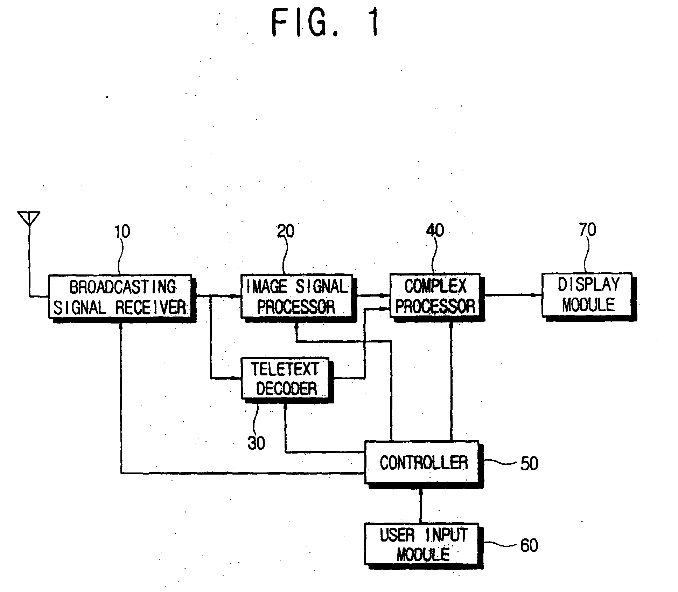

As shown in Figure 1, a display apparatus comprises a broadcasting signal receiver 10 for receiving a broadcast signal. An image processor 20 processes image data for displaying a TV program from the broadcast signal received. A teletext decoder 30 processes teletext data for displaying a teletext program from the broadcast signal. A display module 70 displays an image according to the image data and the teletext data. A complex processor 40 provides an image format capable of displaying the image data provided by the image processor 20 and the teletext decoder 30 on the display module 70. A user input module 60 usable by a user to input a predetermined watching mode. A controller 50 controls the other elements.

The broadcasting signal receiver 10 receives and processes the broadcasting signal received by an antenna. The broadcasting signal receiver 10 may be arranged to receive and process the broadcasting signal or an image signal from one of various signal sources capable of connecting with the display apparatus through a wire and/or wireless system.

The display apparatus may provide various watching modes to users. That is, the display apparatus is capable of selectively providing a general mode capable of watching an ordinary TV program, a teletext mode for of watching a teletext program, and a complex mode capable of watching the TV program and the teletext program together.

Thus, a user may select a wanted watching mode by the user input module 60 and then watch a desired program. Here, the user input module 60 may comprise a predetermined manipulable function key corresponding to the watching mode respectively on an input device such as a remote controller. Also, a part of a display apparatus may comprise a wanted predetermined function key or the user input module 60 by on screen display (OSD) and so on for selecting a specific watching mode. Additionally, the user input module 60 may have an input function capable of selecting a wanted channel and adjusting volume or picture quality.

If a user selects a predetermined channel by the user input module 60, the controller 50 controls the broadcasting signal receiver 10 to receive a broadcasting signal corresponding to the selected channel.

At this time, when the image data for a TV program and the teletext data for a teletext program are received from a selected channel, the controller 50 may operate so that the complex processor 40 has the image data and the teletext data displayed selectively on the display module 70 according to a user selected watching mode.

If a user selects the teletext mode by the user input module 60 and the selected broadcasting signal includes teletext data, the controller 50 operates so that an image according to teletext data of a teletext program is displayed on the display module 70. If a broadcasting signal received at the teletext mode does not include teletext data, the controller 70 controls so that the mode is switched automatically into the complex mode. Thus, a user may watch a TV program by the display module 70 even though the user did not select the TV viewing mode..

That is, if a display apparatus according to the invention has been set to execute to the teletext mode, the controller 50 determines whether a broadcasting signal includes valid teletext data, and then has it converted automatically into a teletext mode or a complex mode depending on the result of the determination. Thus, when valid teletext data is not received in a teletext mode and thus conventionally a black screen would be displayed, the user does not suffer the inconvenience of needing to manually select a complex mode using a predetermined function key by the user input module 60.

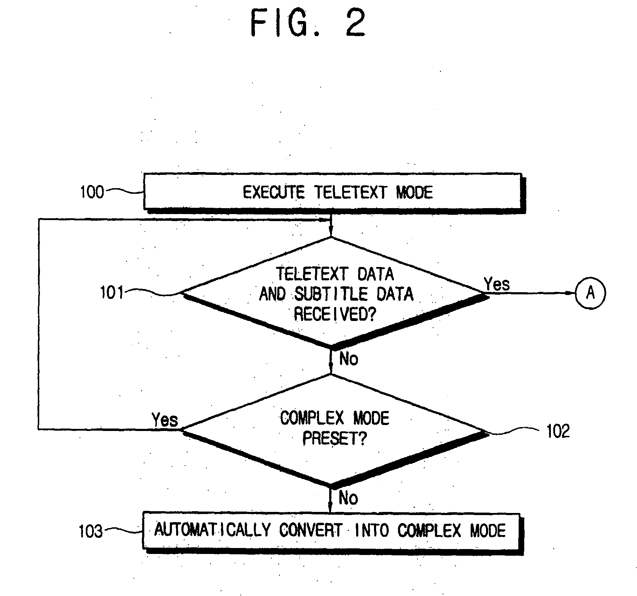

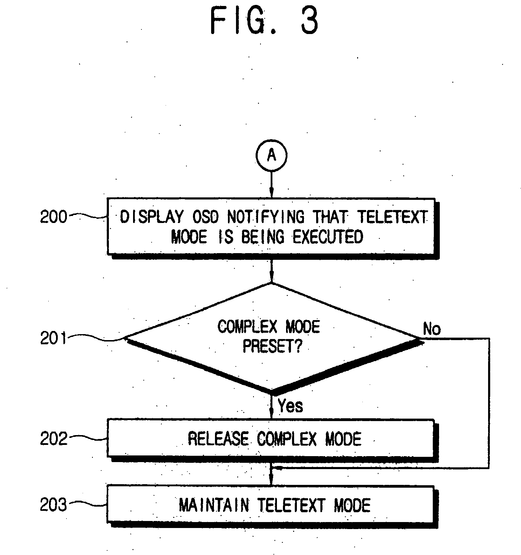

Hereinafter, referring to control flow chart in Figures 2 and 3, the control procedure for executing of a teletext mode will be described more in detail.

First, if a user selects a teletext mode by the user input module 60 to watch a teletext program, the controller 50 operates so that the display apparatus is executed in the teletext mode at operation 100. Thus, the complex processor 40 is operable to receive teletext data from the teletext decoder 30 by a control signal of the controller 50 and then has any received teletext program displayed on the display module 70.

Now, at operation 101, the controller 50 controls the broadcasting signal receiver 10 to receive the broadcasting signal, and determines whether the received broadcasting signal includes teletext data corresponding to the teletext program in the basis of an output signal which is outputted from the teletext decoder 30 by processing the received broadcasting signal therein. At operation 103, if the received broadcasting signal does not include valid teletext data, the controller 50 operates so that a user selected teletext mode is converted into a complex mode capable of displaying a TV program as well as the teletext program. Thus, the complex processor 40 displays a picture according to image data provided from the image signal processor 20 on the display module 70 by a control signal of the controller 50 to prevent a situation in which the screen does not display any picture.

At operation 102, as a result of the determination, if the received broadcasting signal does not include the teletext data, the controller 50 determines whether a user has preset the complex mode. If a user has preset the complex mode, at operation 101 the controller 50 does not proceed to operation 103, and instead continually checks whether the received broadcasting signal includes the teletext data.

At operation 101, while a user is watching a TV at the complex mode set automatically, the controller 50 goes on checking whether the received broadcasting signal includes valid teletext data. If it is determined that the received broadcasting signal includes valid teletext data, the controller 50 controls so that the display apparatus is returned from the complex mode to the teletext mode to display the picture according to the teletext mode (see A, Figure 3).

If the received broadcasting signal includes teletext data, the controller 50 may further comprise an operation additionally detecting whether the teletext data includes subtitle data corresponding to a subtitle page. At operation 103, as a result of the determination, if the teletext data or the received broadcasting signal does not include subtitle data, the controller 50 operates such that the mode is converted automatically into the complex mode.

Also, at operation 201, if the received broadcasting signal includes subtitle data (A), the controller 50 determines whether a user has preset the complex mode. At operations 202 and 203, as result of the determination of the operation 201, if the complex mode has been preset, the controller 50 operates so that the complex mode is released and the teletext mode is maintained. Thus, the complex processor 40 receives valid teletext data from the teletext decoder 30 and then has the picture derived from only the teletext data displayed on the display module 70.

On the other hand, while watching in the complex mode if it is detected that the received broadcasting signal includes subtitle data of teletext data, the controller 50 may have the display apparatus returned from the complex mode to the teletext mode as above (A).

Also, at operation 200, if it is determined that the received broadcasting signal includes valid data corresponding to the teletext program and it is detected that the teletext data includes valid data corresponding to a subtitle page, the controller 50 may operate so that an OSD, notifying that the teletext mode is being executed, is displayed on the display module 70 for a predetermined time before disappearing. Thus, in case of a front projection display apparatus, when the display module 70 feeds a CRT, it may prevent a CRT burning which may otherwise happen on the conversion into a teletext mode.

The invention may be applied alternatively to a front projection display apparatus relating to a display module such as an LCD, a PDP and so on, or a rear projection display apparatus.

It will be appreciated by those skilled in the art that changes may be made without departing from the invention, the scope of which is defined in the appended claims.

## Claims

1. A method of operating display apparatus selectively providing a TV mode, a teletext mode and a complex mode in which a TV program is displayed along with a teletext program, the method comprising,
when in the teletext mode, determining whether a received signal includes teletext data; and
when the received signal does not include teletext data, automatically converting into the complex mode.

2. A method according to claim 1, in which the automatic conversion into the complex mode is a user-activatable feature.

3. A method according to claim 1 or claim 2, further comprising reverting to the teletext mode on determining subsequently that the received signal includes teletext data.

4. A method according to any preceding claim, wherein, in the teletext mode, the teletext data comprises subtitle data, and the step of automatically converting into the complex mode is made only on a determination that the received signal does not include subtitle data.

5. A method according to claim 4, further comprising releasing the complex mode and maintaining the teletext mode, when a user has preset the complex mode and the received signal includes the subtitle data.

6. A method according to claim 4, further comprising returning to the teletext mode, while displaying in the complex mode, when it is detected that the received signal includes the subtitle data of the teletext data.

7. A method according to claim 4, further comprising displaying an on-screen display OSD notifying that the teletext mode is being executed during a predetermined time when it is determined that the received signal includes the teletext data and it is detected that the teletext data includes the subtitle data.

8. Display apparatus comprising an image processor processing image data for displaying a TV program from a received broadcasting signal, a teletext decoder processing teletext data for displaying a teletext program from the broadcasting signal, and a display module displaying a picture according to the image data and/or the teletext data, the apparatus comprising:
a user input module through which a user can input a watching mode; and
a controller operable to automatically convert a watching mode into a complex mode in which a TV program and a teletext program are both capable of being displayed, on determining that a selected watching mode is a teletext program mode and that the received signal does not include teletext data.

9. Display apparatus according to claim 8, further comprising means for monitoring the broadcast signal in the complex mode for the presence of teletext data in the broadcast signal.

10. Display apparatus according to claim 9, wherein the controller is operable to return to the teletext mode from the complex mode, on detecting the presence of teletext data in the broadcast signal.

## Patentansprüche

1. Verfahren zum Operieren einer Anzeigevorrichtung, die selektiv einen Fernsehmodus, einen Teletextmodus und einen Komplexmodus, in dem ein Fernsehprogramm zusammen mit einem Teletextprogramm angezeigt wird, bereitstellt, das Verfahren umfassend,
wenn es im Teletextmodus ist, Bestimmen, ob ein empfangenes Signal Teletextdaten enthält; und
wenn das empfangene Signal keine Teletextdaten enthält, automatisches Umwandeln in den Komplexmodus.

2. Verfahren nach Anspruch 1, in dem die automatische Umwandlung in den Komplexmodus ein vom Benutzer aktivierbares Merkmal ist.

3. Verfahren nach Anspruch 1 oder Anspruch 2, weiter umfassend, in den Teletextmodus zurückzukehren, nachdem anschließend bestimmt wird, dass das empfangene Signal Teletextdaten enthält.

4. Verfahren nach einem der vorstehenden Ansprüche, wobei, in dem Teletextmodus, die Teletextdaten Untertiteldaten umfassen und der Schritt des automatischen Umwandelns in den Komplexmodus nur bei einer Bestimmung durchgeführt wird, dass das empfangene Signal keine Untertiteldaten enthält.

5. Verfahren nach Anspruch 4, weiter umfassend, den Komplexmodus freizugeben und den Teletextmodus beizubehalten, wenn ein Benutzer den Komplexmodus voreingestellt hat und das empfangene Signal die Untertiteldaten enthält.

6. Verfahren nach Anspruch 4, weiter umfassend, während der Anzeige in dem Komplexmodus zu dem Teletextmodus zurückzukehren, wenn detektiert wird, dass das empfangene Signal die Untertiteldaten der Teletextdaten enthält.

7. Verfahren nach Anspruch 4, weiter umfassend, eine Bildschirmanzeige OSD anzuzeigen, die benachrichtigt, dass der Teletextmodus während einer im Voraus bestimmten Zeit ausgeführt wird, wenn bestimmt wird, dass das empfangene Signal die Teletextdaten enthält, und detektiert wird, dass die Teletextdaten die Untertiteldaten enthalten.

8. Anzeigevorrichtung, umfassend einen Bildprozessor, der Bilddaten zur Anzeige eines Fernsehprogramms von einem empfangenen Rundfunksignal verarbeitet, einen Teletextdecoder, der Teletextdaten zur Anzeige eines Teletextprogramms von dem Rundfunksignal verarbeitet, und ein Anzeigemodul, das ein Bild gemäß den Bilddaten und/oder den Teletextdaten anzeigt, die Vorrichtung umfassend:
ein Benutzereingabemodul, durch das ein Benutzer einen Zuschaumodus eingeben kann; und
eine Steuerung, die betriebsfähig ist, um automatisch einen Zuschaumodus in einen Komplexmodus, in dem ein Fernsehprogramm und ein Teletextprogramm beide angezeigt werden können, umzuwandeln, nachdem bestimmt wird, dass ein ausgewählter Zuschaumodus ein Teletextprogrammmodus ist und dass das empfangene Signal keine Teletextdaten enthält.

9. Anzeigevorrichtung nach Anspruch 8, weiter Mittel zum Überwachen des Rundfunksignals in dem Komplexmodus auf das Vorhandensein von Teletextdaten in dem Rundfunksignal umfassend.

10. Anzeigevorrichtung nach Anspruch 9, wobei die Steuerung betriebsfähig ist, um bei Detektieren des Vorhandenseins von Teletextdaten in dem Rundfunksignal von dem Komplexmodus zu dem Teletextmodus zurückzukehren.

## Revendications

1. Méthode d'exploitation d'un appareil de visualisation affichant sélectivement un mode télévision, un mode télétexte et un mode complexe dans lequel un programme télévisuel est affiché en même temps qu'un programme télétexte, ladite méthode comprenant les étapes consistant à :
en mode télétexte, déterminer si un signal reçu contient des données de télétexte ; et
lorsque le signal reçu ne contient pas de données de télétexte, passer automatiquement en mode complexe.

2. Méthode selon la revendication 1, dans laquelle le passage automatique en mode complexe est une fonction qui peut être activée par l'utilisateur.

3. Méthode selon la revendication 1 ou la revendication 2, comprenant en plus le retour en mode télétexte lorsqu'il est déterminé par la suite que le signal reçu contient des données de télétexte.

4. Méthode selon l'une quelconque des revendications précédentes, dans laquelle, en mode télétexte, les données de télétexte comprennent des données de sous-titrage et l'étape de passage automatique en mode complexe a lieu uniquement lorsqu'il est déterminé que le signal reçu ne contient pas de données de sous-titrage.

5. Méthode selon la revendication 4, comprenant en plus la libération du mode complexe et le maintien du mode télétexte lorsqu'un utilisateur a prédéfini le mode complexe et que le signal reçu contient les données de sous-titrage.

6. Méthode selon la revendication 4, comprenant en plus le retour en mode télétexte, lors d'une visualisation en mode complexe, lorsqu'il est détecté que le signal reçu contient les données de sous-titrage des données de télétexte.

7. Méthode selon la revendication 4, comprenant en plus l'affichage à l'écran d'un message en surimpression notifiant que le mode télétexte est en cours d'exécution pendant une durée prédéfinie lorsqu'il est déterminé que le signal reçu contient les données de télétexte et qu'il est détecté que les données de télétexte contiennent les données de sous-titrage.

8. Appareil de visualisation comprenant un processeur d'image qui traite des données d'image pour afficher un programme télévisuel à partir d'un signal de diffusion reçu, un décodeur de télétexte qui traite des données de télétexte pour afficher un programme télétexte à partir du signal de diffusion, et un module de visualisation qui affiche une image en fonction des données d'image et/ou des données de télétexte, ledit appareil comprenant :
un module de saisie utilisateur au moyen duquel un utilisateur peut saisir un mode de visionnage ; et
un contrôleur commandable pour passer automatiquement d'un mode de visionnage à un mode complexe dans lequel un programme télévisuel et un programme télétexte peuvent être affichés l'un et l'autre lorsqu'il est déterminé qu'un mode de visionnage sélectionné est un mode de programme télétexte et que le signal reçu ne contient pas de données de télétexte.

9. Appareil de visualisation selon la revendication 8, comprenant en plus des moyens de monitorage du signal diffusé en mode complexe afin de détecter la présence de données de télétexte dans le signal diffusé.

10. Appareil de visualisation selon la revendication 9, dans lequel le contrôleur est commandable pour repasser du mode complexe en mode télétexte lorsqu'il est détecté que des données de télétexte sont présentes dans le signal diffusé.
